# EUROPEAN PATENT APPLICATION

(11) **EP 2 395 117 A1**
(43) Date of publication of application: **14.12.2011**
(21) Application number: 11168207.6
(22) Date of filing: 31.05.2011
(51) Int. Cl.: C22B 21/00, B41N 1/08, F27B 3/04

(54) **Method and apparatus for melting collected printing plate and method for recycling collected printing plate**

(30) Priority: 11.06.2010 JP 2010134013
(71) Applicant: Fujifilm Corporation, Minato-ku Tokyo 106-8620 (JP)
(72) Inventor: Osada, Masakazu, Shizuoka, 421-0396 (JP)
(74) Representative: HOFFMANN EITLE

(57) **Abstract**

The present invention provides a method and an apparatus for melting collected printing plates, and a method for recycling collected printing plates that can reduce oxidation losses even when collected printing plates are directly melted together with new metal, and therefore it is possible to obtain a melting yield ratio as high as the melting yield ratio obtained when the collected printing plates are melted in a secondary metal state. New metal 37 is melted in a first melting furnace 12 so as to form molten metal 37A, and the molten metal 37A is sent to a second melting furnace 13. In addition, a vortex 39 that sinks down into the molten metal 37A of the second melting furnace 13 is formed, and collected printing plates 35 are fed into the vortex 39.

## Description

### BACKGROUND OF THE INVENTION

1. Field of the Invention

The present invention relates to a method and an apparatus for melting collected printing plates and a method for recycling collected printing plates, and particularly to a technology that improves the melting yield ratio when a collected printing plate is directly melted in a furnace for melting before rolling in a rolling apparatus. Hereinafter, lithographic printing plates and collected printing plates that are made of aluminum or an aluminum alloy are described, but the plates are not limited thereto and may be made of zinc or the like. Naturally, attention should be paid to the fact that lithographic printing plates and collected printing plates are mainly made of aluminum or an aluminum alloy.

2. Description of the Related Art

A lithographic printing plate is manufactured by, for example, forming a plate-manufacturing layer (a photosensitive layer or the like) on an aluminum supporter for the lithographic printing plate which has been subjected to a surface roughening treatment. As a method for the surface roughening treatment, a mechanical surface roughening treatment, an electrochemical surface roughening treatment, a chemical surface roughening treatment (chemical etching) or a method combining the above can be used, and, when the surfaces are roughened evenly and densely, it is necessary that new highly pure metal be used as an aluminum raw material, and also that the content of trace metals, such as Si, Fe, Cu, Mn, or the like, be strictly adjusted.

As a result, in the past, it has been difficult to use used lithographic printing plates (aluminum scrap) as an aluminum raw material for the supporters for lithographic printing plates, and, in reality, such plates are recycled as material in which a high content of the trace metals is permitted, for example, window sashes, vehicle engines, vehicle wheels, or the like.

However, in order to manufacture 1 kg of new metal, a large amount of energy that amounts to 1.40.9 MJ is required, and an extremely large amount of CO₂ that acts as a cause of global warming is generated, which amounts to 9.22 kg per 1 kg of metal. On the other hand, when 1 kg of secondary metal is manufactured using used lithographic printing plates that have been used for printing or collected printing plates that are collected leftover materials, such as leftover pieces generated during the cutting of lithographic printing plates in the manufacturing process of lithographic printing plates as a raw material, a necessary amount of energy is about 4% of that of the new metal, and the amount of CO₂ generated is also extremely small, amounting to about 4% of that of the new metal.

Therefore, in order to manufacture an aluminum raw material for the supporters for lithographic printing plates using little energy, it is important to recycle collected printing plates as a secondary material.

In recent years, studies have been progressing in which collected printing plates are melted again and then are recycled as an aluminum raw material for the supporters of lithographic printing plates, and Patent Document 1 is one example thereof.

Patent Document 1 discloses a method in which collected printing plates are melted in a furnace for the exclusive use of melting so as to produce secondary metal (ingots), and then the secondary metal is mixed with new metal and melted in a furnace for melting before rolling in a rolling apparatus so as to be rolled into a thin plate shape, thereby manufacturing original plates for the supporters of lithographic printing plates, or a method in which, after collected printing plates are melted in a furnace for the exclusive use of melting, the melted fluid of the collected printing plates is mixed with new metal, is melted, and then is rolled into a thin plate shape, thereby manufacturing original plates for the supporters of lithographic printing plates. Here, direct melting of collected printing plates without going through secondary metal is referred to as "direct melting."

[Patent Document 1] Pamphlet of International Publication WO 2009/084568

### SUMMARY OF THE INVENTION

Against a background of ongoing demand for additional cost reduction, there is a demand for further improvement in energy efficiency. Considering such a demand, if it is possible to reuse collected printing plates by directly recycling the collected printing plates without going through secondary metal, as disclosed in Patent Document 1, energy efficiency is significantly improved.

However, even when collected printing plates are directly recycled and reused, since collected printing plates, particularly, used lithographic printing plates, have an area approximately as large as a newspaper and a thin plate shape (with a thickness of about 0.1 mm to 0.4 mm) so as to have a large surface area, oxidation losses become extremely large due to burning or the like although the collected printing plates are directly melted in a furnace for melting before rolling in a rolling apparatus. As a result of the large oxidation losses, there is a problem in that the melting yield ratio is merely about 80% to 85% when collected printing plates are melted as they are while the melting yield ratio is about 97% which is approximately similar to that of new metal when collected printing plates are melted in a secondary metal state. Furthermore, since the furnace for melting before rolling is designed to melt plates in a state in which ingots demand a high melting temperature, similarly to secondary metal or new metal, the furnace employs a direct flame burner heating method in which the flame of a burner directly burns and melts ingots. Therefore, when collected printing plates are directly melted without going through secondary metal, oxidation further proceeds, and thus the melting yield ratio deteriorates.

The invention has been made in consideration of the above circumstances, and an object of the invention is to provide a method and an apparatus for melting collected printing plates and a method for recycling collected printing plates that can reduce oxidation losses even when the collected printing plates are directly melted together with new metal and that can obtain a melting yield ratio as high as the melting yield ratio obtained when the collected printing plates are melted in a secondary metal state.

In order to achieve the above object, the method for melting collected printing plates according to the invention is a method for melting collected printing plates in which used lithographic printing plates and/or the collected printing plates that are a collection of a collection of leftover materials, such as leftover pieces generated during the cutting of lithographic printing plates, and new metal are melted in a melting furnace, including a first melting step in which the new metal is fed into and melts in the melting furnace and a second melting step in which a vortex into which the molten metal sinks down is generated in the molten metal of the new metal, and the collected printing plates are fed into and melt in the molten metal with the vortex generated therein.

According to the melting method of the invention, firstly, new metal that has a small surface area and is difficult to be oxidized is melted so as to form molten metal, and also a downward vortex is generated in the molten metal, and thin plate-shaped collected printing plates that have a large surface area and are easy to be oxidized are fed into the vortex. Thereby, the plate-shaped collected printing plates that are liable to float on the molten metal immediately sink down into the molten metal, and therefore it is possible to greatly shorten the time during which the collected printing plates come into contact with oxygen in the atmosphere at a high temperature. Thereby, it is possible to effectively suppress the oxidation of the collected printing plates, and therefore it is possible to significantly reduce the oxidation losses of the collected printing plates that are easily oxidized.

In the invention, it is favorable that the melting furnace be a separately provided melting furnace in which a first melting furnace that performs the first melting step and a second melting furnace that performs the second melting step and has a smaller capacity than the first melting furnace are mutually communicated, and the molten metal of the new metal melted in the first melting furnace be flowed into the second melting furnace, and also the vortex be generated in the second melting furnace.

It is also possible to melt new metal in a single melting furnace so as to form molten metal and to form a vortex, but, when a vortex is generated, not only do the collected printing plates sink down but air (oxygen) in the atmosphere also becomes liable to be sucked into the molten metal, thereby making the molten metal liable to be oxidized.

Therefore, by constructing the melting furnace as a separately provided melting furnace in which the first melting furnace that performs the first melting step and the second melting furnace that performs the second melting step and has a smaller capacity than the first melting furnace are mutually communicated and by flowing the molten metal of the new metal melted in the first melting furnace into the second melting furnace and also generating the vortex in the second melting furnace, it is possible not only to prevent the oxidation of the molten metal in the first melting furnace but also to suppress air from being sucked into the molten metal due to the vortex. More favorably, by supplying an inert gas (for example, a nitrogen gas) to the second melting furnace, it is possible to reliably reduce air sucked into the molten metal due to the vortex.

In the invention, the melting furnace is favorably a furnace for melting before rolling in a rolling apparatus. Furthermore, at this time, the rolling apparatus is favorably a rolling apparatus for aluminum. When the rolling apparatus for aluminum is used, it is necessary to adjust the content of the trace metals in aluminum plates to be manufactured in accordance with the usage of the aluminum plates in the furnace for melting before rolling. Therefore, it is necessary to melt collected printing plates together with new metal, and it is possible to effectively use the invention.

In the invention, the concentration of oxygen in the melting furnace is favorably 11% or lower, and particularly favorably 6% or lower when the plates and the new metal are melted.

As a method for adjusting the concentration of oxygen in the melting furnace to 11% or lower, an air ratio control or a smoke exhaust control can be used. That is, it is favorable to control the air ratio which is a ratio of the flow rate of air to the flow rate of a fuel in a burner so as not to generate excessive oxygen in the furnace.

By controlling the air ratio to approach the theoretical air ratio as closely as possible so as not to generate excessive oxygen in the furnace, the concentration of oxygen in the melting furnace can be diluted, and therefore it is possible to further reduce oxidation losses during melting.

In addition, in the invention, the melting furnace has an airtight structure having a smoke exhaust tube provided with a damper, and it is favorable to perform a smoke exhaust control so as to increase the pressure inside the melting furnace to be higher than outside by opening and closing the damper.

By using a melting furnace with an airtight structure and performing a smoke exhaust control so as to increase the pressure inside the melting furnace to be higher than outside, air does not flow in the melting furnace from outside, and therefore the concentration of oxygen in the melting furnace can be diluted. Thereby, it is possible to further reduce oxidation losses during melting.

In order to achieve the object, the apparatus for melting collected printing plates according to the invention is an apparatus for melting collected printing plates in which used lithographic printing plates and/or collected printing plates that are a collection of leftover materials generated during the cutting of lithographic printing plates are melted together with new metal, including a melting furnace provided with a burner and a vortex-generating apparatus that is provided in the melting furnace and generates a vortex into which molten metal sinks down.

Thereby, a vortex is generated by the vortex-generating apparatus in the molten metal of the new metal, and the collected printing plates are fed into the vortex so that the collected printing plates immediately sink down during melting. Thereby, the collected printing plates that are liable to float on the molten metal immediately sink down into the molten metal, and therefore it is possible to greatly shorten the time during which the collected printing plates come into contact with oxygen in the atmosphere at a high temperature. Thereby, it is possible to effectively suppress the oxidation of the collected printing plates, and therefore it is possible to significantly reduce the oxidation losses of the collected printing plates that are easily oxidized.

In addition, in the melting apparatus, the melting furnace is constituted of a first melting furnace in which the new metal is fed and melted, a second melting furnace having a smaller capacity than the first melting furnace, in which the collected printing plates are fed and melted, and communicating paths that communicate the first melting furnace and the second furnace, and the vortex-generating apparatus is favorably provided in the second melting furnace.

Thereby, the vortex-generating apparatus is provided in a single melting furnace, and therefore it is possible to suppress the suction of air (oxygen) into the molten metal caused by the generation of the vortex in comparison to when the collected printing plates are fed into the molten metal of the new metal. In this case, it is more favorable to provide nozzles that supply an inert gas to the second melting furnace.

In order to achieve the above object, the method for recycling collected printing plates according to the invention is a method for recycling collected printing plates in which used lithographic printing plates and/or collected printing plates that are a collection of leftover materials, such as leftover pieces generated during the cutting of lithographic printing plates, are recycled and reused as an aluminum raw material for the supporters of lithographic printing plates, in which the collected printing plates are directly melted together with new metal in a furnace for melting before rolling in a rolling apparatus without going through secondary metal, and the above melting method is used for the direct melting.

In addition, in order to achieve the above object, the method for recycling collected printing plates according to the invention is a method for recycling collected printing plates in which used lithographic printing plates and/or collected printing plates that are a collection of leftover materials, such as leftover pieces generated during the cutting of lithographic printing plates, are recycled and reused as an aluminum raw material for the supporters of lithographic printing plates, in which the above melting apparatus is disposed adjacent to the furnace for melting before rolling in the rolling apparatus, the collected printing plates are directly melted in the melting apparatus, and the molten metal is sent to the furnace for melting before rolling.

According to the recycling method of the invention, it is possible to obtain a high melting yield ratio even without the step in the related art in which collected printing plates are made to be secondary metal and then are melted in a furnace for melting before rolling in a rolling apparatus. Thereby, it is possible to remove the step in the related art for temporarily making collected printing plates to be secondary metal, and thus to complete the entire process with a single round of melting in a furnace for melting before rolling. As a result, it is possible to markedly improve the energy efficiency for recycling collected printing plates into an aluminum raw material for the supporters of lithographic printing plates.

According to the method and the apparatus for melting collected printing plates of the invention since it is possible to reduce oxidation losses even when collected printing plates are directly melted together with new metal, it is possible to obtain a melting yield ratio as high as the melting yield ratio obtained when the collected printing plates are melted in a secondary metal state.

In addition, according to the recycling method of the invention, it is possible to remove the step in the related art for temporarily making collected printing plates to be secondary metal, and thus to complete the entire process with a single round of melting in a furnace for melting before rolling. As a result, it is possible to markedly improve the energy efficiency for recycling collected printing plates into an aluminum raw material for the supporters of lithograph printing plates.

### BRIEF DESCRIPTION OF THE DRAWINGS

Fig. 1 is an explanatory view explaining an apparatus for melting collected printing plates of the present embodiment.

Fig. 2 is an explanatory view explaining an apparatus for melting collected printing plates in the related art.

Fig. 3 is an explanatory view explaining a method for recycling collected printing plates of the invention.

Fig. 4 is an explanatory view explaining a method for recycling collected printing plates in the related art.

### DESCRIPTION OF THE PREFERRED EMBODIMENTS

Hereinafter, favorable embodiments of the method and apparatus for melting collected printing plates and the method for recycling collected printing plates according to the invention will be described in detail.

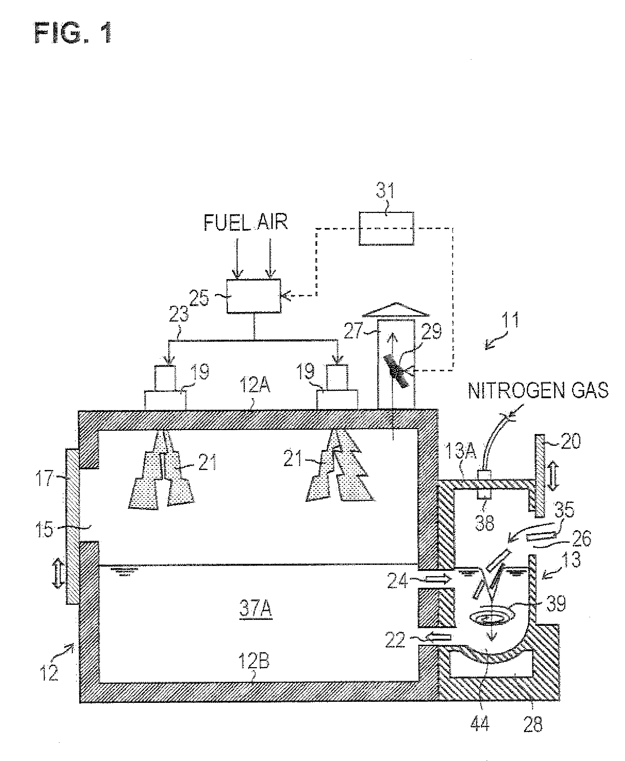

Fig. 1 is an explanatory view conceptually showing an apparatus for melting collected printing plates according to an embodiment of the invention.

As shown in Fig. 1, a melting apparatus 11 is mainly constituted of a first melting furnace 12 and a second melting furnace 13.

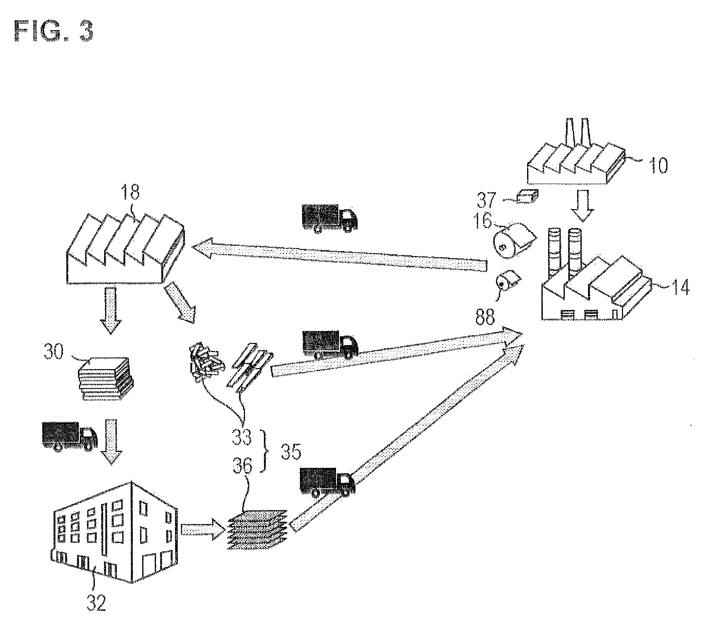

The first melting furnace 12 has a first feeding opening 15 at a side surface of the furnace for feeding new metal 37 (refer to Fig. 3) and is also provided with a first door 17 that can move up and down so as to open and close the first feeding opening at the first feeding opening 15. In this case, it is favorable to adopt a structure in which the first feeding opening 15 can be sealed with the first door 17 by providing a packing in the first feeding opening 15, or the like.

A plurality of burners 19 is mounted on a roof 12A of the first melting furnace 12, and the new metal 37 fed into the first melting furnace 12 is melted by flames 21 blowing out from the burners 19. The burners 19 are supplied with a fuel and air through pipes 23, and an air ratio adjustment means 25 is provided in the middle of the pipes 23 to adjust the air ratio of the fuel to air.

In addition, a smoke exhaust tube 27 is mounted on the roof 12A of the first melting furnace 12 and exhausts smoke generated by melting. A damper 29 is provided in the smoke exhaust tube 27 so that it is possible to adjust the amount of smoke exhausted by varying the opening area of the smoke exhaust tube 27.

The burners 19 and the damper 29 are connected to a controller 31 through signal cables or wirelessly, and the air ratio of the burners 19 and the amount of smoke exhausted by the damper 29 are controlled by the controller 31.

On the other hand, a second melting furnace 13 is provided adjacent to the first melting furnace 12 at the side wall of the first melting furnace 12 opposite to the first feeding opening 15. The second melting furnace 13 has a second feeding opening 26 at a side surface of the furnace for collected printing plates 35 (refer to Fig. 3) and is provided with a second door 20 that can move up and down so as to open and close the second feeding opening at the second feeding opening 26. In this case, it is favorable to adopt a structure in which the second feeding opening 26 can be sealed with the second door 20 by providing a packing in the second feeding opening 26, or the like.

In addition, the first melting furnace 12 and the second melting furnace 13 are communicated with each other through two communicating paths 22 and 24 located above and below. Thereby, high-temperature molten metal 37A formed by melting the new metal 37 in the first melting furnace 12 is flowed in the second melting furnace 13 through the communicating paths 22 and 24 so that the surfaces of liquids in the first melting furnace 12 and the second melting furnace 13 become the same.

In addition, the bottom portion in the second melting furnace 13 has a semicircular shape of vertical cross-section and is provided with an electromagnetic induction-type stirring apparatus 28 in a storage room formed in the bottom portion. Additionally, a vortex 39 into which the molten metal in the second melting furnace 13 sinks down is generated by operating the stirring apparatus 28. For example, when stirring blades are used as a vortex-generating apparatus, the rotation speed of the stirring blades is favorably about 700 rpm to 850 rpm. When the rotation speed is lower than 700 rpm, the vortex is weak, and when the rotation speed is higher than 850 rpm, the shaft or the like in the stirring blades may be damaged.

Here, the stirring apparatus 28 is not limited to the electromagnetic induction type, and any methods for the stirring apparatus, such as a method using a magnet, such as a permanent magnet or the like, a method using a pump, a method using both a drop and a pump, or a mechanical stirring method in which stirring blades and a rotary shaft, both of which are made of a material that can be used in molten metal with a high temperature of 850 °C or higher are used, may be used.

A nozzle 38 is provided on a roof 13A of the second melting furnace 13 to supply an inert gas, for example, a nitrogen gas, to the second melting furnace 13, and the nozzle 38 is connected with an inert gas supplying apparatus, not shown.

Next, the method for melting collected printing plates of the invention using the melting apparatus 11 constituted as above will be described.

The new metal 37 of aluminum is fed in the first melting furnace 12 through the first feeding opening 15, and the new metal 37 fed into the first melting furnace 12 is melted by the flames 21 blowing out from the burners 19. Thereby, the high-temperature molten metal 37A which is the molten new metal 37 is formed in the first melting furnace 12. The new metal 37 is favorably a small ingot weighing about 5 kg to 10 kg. A small-sized ingot does not break a hearth 12B when being fed. Additionally, the molten metal 37A of the new metal 37 formed in the first melting furnace 12 is flowed into the second melting furnace 13 through the communicating paths 22 and 24 so that the surfaces of liquids in the first melting furnace 12 and the second melting furnace 13 become the same.

Next, once the molten metal 37A of the new metal 37 accumulates in the second melting furnace 13, the stirring apparatus 28 is operated so as to generate the vortex 39 into which the molten metal 37A sinks down in the second melting furnace 13. In a state in which the vortex 39 is generated, the collected printing plates 35 are fed through the second feeding opening 26. The vortex 39 has a V-shaped vertical cross-section in the center of the surface, and the fed collected printing plates 35 are drawn into the center of the vortex 39, sink down into the molten metal 37A, and then are melted by the high-temperature molten metal 37A. As a result, mixed molten metal 40 that is a mixture of the molten metal 37A of the new metal 37 and the molten metal of the collected printing plates 35 is formed in the second melting furnace 13.

Here, the collected printing plates 35 refer to used lithographic printing plates 36 that have been used for printing and/or leftover materials 33, such as leftover pieces generated during the cutting of a lithographic printing plate in the manufacturing process of the lithographic printing plate (refer to Fig. 3). Since the used lithographic printing plates 36 that have been used for printing have an area approximately as large as a newspaper and a thin plate shape (with a thickness of about 0.1 mm to 0.4 mm), it is difficult for the plates to sink down into the molten metal 37A even when the plates are fed in as they are. Therefore, it is preferable to cut the lithographic printing plates 36 into small pieces and then feed the small pieces of the lithographic printing plates into the second melting furnace 13. The size of the small piece is, for example, about 50 mm x 50 mm (vertical side × horizontal side), or, favorably, smaller than the above. Fig. 1 shows the small pieces of the collected printing plates 35.

In the melting of the collected printing plates 35, due to the generation of the vortex 39, not only do the collected printing plates 35 sink down into the molten metal 37A, but also air (oxygen) is entered in the molten metal 37A. Therefore, it is favorable to supply an inert gas, for example, a nitrogen gas, to the second melting furnace 13 from the nozzle 38 provided on the roof 13A of the second melting furnace 13 so as to reduce the concentration of oxygen in the second melting furnace 13.

In addition, since the downward vortex 39 generated in the second melting furnace 13 generates a liquid flow from the liquid surface to the hearth 14B, the mixed molten metal 40 in the second melting furnace 13 flows into the first melting furnace 12 through the lower communicating path 22. Thereby, between the first melting furnace 12 and the second melting furnace 13, a circulating flow of the molten metal, expressed by arrows, is formed through the communicating paths 22 and 24. Therefore, the mixed molten metal 40 in the second melting furnace 13 flows into the first melting furnace 12 so that the mixing ratio of the new metal 37 and the collected printing plates 35 in the molten metal becomes uniform.

As such, according to the embodiment of the melting method according to the invention, firstly, the new metal 37 that has a small surface area and is difficult to be oxidized is melted so as to form the molten metal 37A, and also the downward vortex is generated in the molten metal 37A, and the thin plate-shaped collected printing plates 35 that have a large surface area and are easy to be oxidized are fed into the vortex 39. Thereby, the collected printing plates 35 that are liable to float on the molten metal 37A immediately sink down into the molten metal 37A, and therefore it is possible to greatly shorten the time during which the collected printing plates 35 come into contact with oxygen in the atmosphere at a high temperature. Therefore, it is possible to effectively suppress the oxidation of the collected printing plates 35, and therefore it is possible to significantly reduce the oxidation losses even in the collected printing plates 35 that are easily oxidized.

Particularly, in the embodiment, the melting apparatus 11 is structured in a manner such that the first melting furnace 12 that melts the new metal 37 and the second melting furnace 13 that has a smaller capacity than the first melting furnace are mutually communicated through the communicating paths 22 and 24, and the molten metal 37A of the new metal 37 melted in the first melting furnace 12 is flowed into and stored in the second melting furnace 13, and the vortex 39 is generated in the second melting furnace 13. Thereby, air is not entered in the first melting furnace 12 having a larger capacity than the second melting furnace 13, and therefore it is possible to prevent the oxidation of the molten metal 37A in the first melting furnace 12. In addition, since the vortex 39 is generated in the second melting furnace 13 having a small capacity, it is possible to suppress air (oxygen) drawn into the mixed molten metal 40 by the vortex 39.

In addition, in the embodiment, since an inert gas (for example, a nitrogen gas) is supplied to the second melting furnace 13, it is possible to reliably reduce air (oxygen) drawn into the mixed molten metal 40 by the vortex 39.

Meanwhile, the collected printing plates 35 may be melted in the second melting furnace 13 after all the new metal 37 that is supposed to be melted in the first melting furnace 12 is fully melted, or, when the molten metal 37A accumulates to a certain extent in the second melting furnace 13, the new metal 37 and the collected printing plates 35 may be melted simultaneously in the first melting furnace 12 and in the second melting furnace 13, respectively.

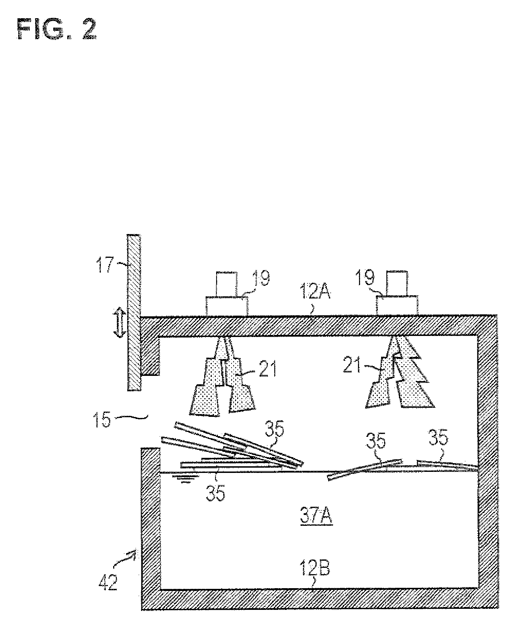

On the other hand, as shown in Fig. 2, when, firstly, the new metal 37 is melted in a single melting furnace 42 so as to form the molten metal 37A, and then the collected printing plates 35 are fed into the molten metal 37A, the collected printing plates 35 float on the molten metal 37A and rarely sink down, and therefore the flames 21 of the burners 19 come into direct contact with the collected printing plates 35 that are easily oxidized. Thereby, since aluminum oxides are liable to be formed, the oxidation losses of the collected printing plates 35 become extremely large. Meanwhile, Fig. 2 shows a case in which the used lithographic printing plates are not cut into small pieces and are fed into the melting furnace 42.

In fact, as a result of comparison between the melting yield ratio when the melting apparatus 11 of the invention in Fig. 1 was used and the melting yield ratio when the melting apparatus in Fig. 2 was used, the melting apparatus in Fig. 1 exhibited a melting yield ratio of 95% to 98% while the melting apparatus in Fig. 2 exhibited a melting yield ratio of 90% to 94%.

In addition, in order to further improve the melting yield ratio, the concentration of oxygen in the first melting furnace 12 when the plates and the new metal are melted is favorably 11% or lower, and particularly favorably 6% or lower.

As a method for adjusting the concentration of oxygen in the first melting furnace 12 to 11% or lower, an air ratio control and a smoke exhaust control can be favorably used.

That is, the controller 31 controls the air ratio adjustment means 25 to perform an air ratio control so that excessive oxygen is not generated in the first melting furnace 12. As such, by controlling the air ratio to approach the theoretical air ratio as closely as possible so that excessive oxygen is not generated in the first melting furnace 12, it is possible to dilute the concentration of oxygen in the first melting furnace 12.

Furthermore, the controller 31 controls the damper 29 provided in the smoke exhaust tube 27 to perform a smoke exhaust control so that the pressure inside the first melting furnace 12 is increased higher than outside. Thereby, it is possible to prevent air from flowing in from the outside of the first melting furnace 12, and therefore the concentration of oxygen in the first melting furnace 12 can be diluted.

Therefore, when the air ratio control and the smoke exhaust control are performed, the oxidation losses of the collected printing plates 35 can be further suppressed.

Next, the method for recycling the collected printing plates according to the invention will be described in comparison to a recycling method in the related art.

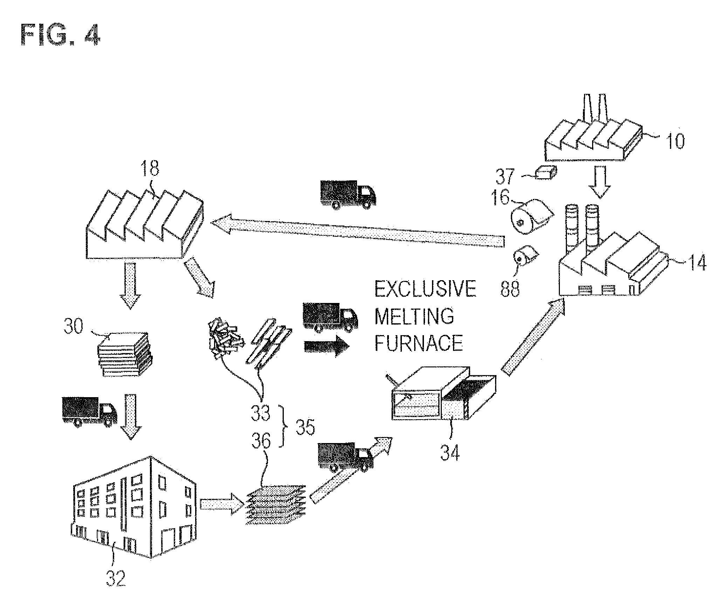

Fig. 3 shows the recycling loop of the invention in which the collected printing plates 35 are recycled and thus reused as an aluminum raw material for the supporters of lithographic printing plates, and Fig. 4 shows a recycling loop in the related art.

As shown in Fig. 3 and Fig. 4, in an aluminum refining factory 10, the new metal 37 of aluminum is manufactured from bauxite. The aluminum purity of the new metal 37 of aluminum is favorably 99.7% or higher.

Next, the new metal 37 of aluminum is melted in a furnace for melting before rolling in an aluminum rolling factory 14 so as to become molten metal, and then hot rolling and cold rolling are performed. As the furnace for melting before rolling, a well-known furnace can be used. Thereby, an aluminum plate made of 100% new metal is manufactured in the form of a roll rolled in a coil shape. The initial temperature of the hot rolling is favorably 350 °C to 500 °C. An intermediate annealing process may be performed before or after the hot rolling or in the middle of the hot rolling, but it is favorable to skip the intermediate annealing process from the viewpoint of suppressing the generation of CO₂. The thickness of the aluminum plate obtained from the rolling processes is favorably in a range of 0.1 mm to 0.4 mm. Meanwhile, the flatness may be improved by a correction apparatus, such as a roller leveler, a tension leveler, or the like after the rolling processes.

In addition, the aluminum plate 16 that has been subjected to the rolling processes or the like is sent to a factory for manufacturing lithographic printing plates 18 in a state of an aluminum coil rolled in a coil shape.

In the factory for manufacturing lithographic printing plates 18, a surface roughening treatment, anodization, or the like are performed on the aluminum plate 16 so as to manufacture a supporter for lithographic printing plates. Next, in a step for forming a plate-manufacturing layer, a coating fluid for a photosensitive layer is coated on the surface of the supporter for lithographic printing plates on which the surface roughening treatment has been performed, and a photosensitive layer is dried in a drying step. Thereby, a band-shaped original plate of the lithographic printing plate is manufactured, and therefore, in a working step, the band-shaped original plate is cut into rectangular sheets with predetermined dimensions with a band-shaped laminated paper overlapped thereon so as to manufacture a laminated paper-attached lithographic printing plate. In the working step of such a band-shaped original plate, the leftover materials 33 (a thin plate with a single side of about 1 cm to 60 cm), such as leftover pieces generated during the cutting of the band-shaped original plate or the like, are generated, and the leftover materials are collected in the factory for manufacturing lithographic printing plates 18.

On the other hand, lithographic printing plates 30 sent to a printing company 32 are subjected to image exposure and development, and then are attached to a printing machine and used for printing. Additionally, used lithographic printing plates 36 that have been used for printing are collected as secondary materials in the printing company 32.

Up to this point in the process, the invention and the related art are the same. However, in the recycling method of the invention, the used lithographic printing plates 36 collected in the printing company 32 and the collected printing plates 35 that are a collection of the leftover materials 33 or the like collected in the factory for manufacturing lithographic printing plates 18 are directly sent to the aluminum rolling factory 14 without going through a recycling factory 34 (refer to Fig. 4), unlike the related art.

Additionally, in the furnace for melting before rolling in the aluminum rolling factory 14, the collected printing plates 35 are directly melted together with the new metal 37 without going through secondary metal so as to manufacture a coil-shaped roll 88 of recycled aluminum plates.

In such a direct melting, the melting apparatus 11 of the invention as described in the above is used. Thereby, it is possible to obtain a high melting yield ratio even without going through secondary metal, which is performed in the related art, and therefore it is possible to reuse the collected printing plates 35 with a single round of melting in the furnace for melting before rolling.

In this case, it is also possible to extend the second melting furnace 13 in which a vortex is generated by reforming the furnace for melting before rolling. However, it is more favorable to dispose the melting apparatus 11 of collected printing plates according to the invention adjacent to the furnace for melting before rolling, to directly melt the collected printing plates 35 in the melting apparatus 11, and to send the melted molten metal to the furnace for melting before rolling so as to be mixed with the new metal in the molten state in the furnace for melting before rolling or in molten aluminum metal produced from the new metal and the secondary metal. As such, when the collected printing plates are fed into the furnace for melting before rolling not as is, but in the form of molten metal, it is possible to accurately adjust the mixing ratio of the collected printing plates even when the amount of the collected printing plates collected is increased.

As a method for sending the molten metal, the melting apparatus 11 and the furnace for melting before rolling may be connected through a pipe, or the molten metal in the melting apparatus 11 may be filled into a heat-stable heat retention container and then transported to the furnace for meting before rolling.

On the other hand, in the recycling method in the related art shown in Fig. 4, the collected printing plates 35 must be melted twice in the recycling factory 34 and the aluminum rolling factory 14, and therefore the energy efficiency is poor.

Therefore, the recycling method of collected printing plates according to the invention can markedly improve the energy efficiency of recycling in which the collected printing plates 35 are used as an aluminum raw material for the supporters of lithographic printing plates.

Thereby, when the recycling method of collected printing plates according to the invention is performed, energy costs for melting can be reduced, and transportation costs can also be reduced since it is not necessary to go through the recycling factory 34, whereby it is possible to construct a circulation-type recycling system costing less than the related art.

Meanwhile, in the embodiment, a case in which the melting furnace is constituted of the first melting furnace, the second melting furnace, and the communicating paths that communicate the first melting furnace and the second melting furnace, and the vortex-generating apparatus is provided in the second melting furnace has been described, but it is also possible to provide the vortex-generating apparatus in a single melting furnace.

10 ... ALUMINUM REFINING FACTORY, 11 ... MELTING APPARATUS, 12 ... FIRST MELTING FURNACE, 13 ... SECOND MELTING FURNACE, 14 ... ALUMINUM ROLLING FACTORY, 15 ... FIRST FEEDING OPENING, 16 ... ALUMINUM PLATE MADE OF 100% NEW METAL, 17 ... FIRST DOOR, 18 ... FACTORY FOR MANUFACTURING LITHOGRAPHIC PRINTING PLATES, 19 ... BURNER, 20 ... SECOND DOOR, 21 ... FLAME, 22 ... COMMUNICATING PATH, 23 ... PIPE, 24 ... COMMUNICATING PATH, 25 ... AIR RATIO ADJUSTMENT MEANS, 26 ... SECOND FEEDING OPENING, 27 ... SMOKE EXHAUST TUBE, 28 ... VORTEX-GENERATING APPARATUS, 29 ... DAMPER, 30 ... LITHOGRAPHIC PRINTING PLATE, 31 ... CONTROLLER, 32 ... PRINTING COMPANY, 33 ... LEFTOVER MATERIAL, 34 ... RECYCLING FACTORY, 35 ... COLLECTED PRINTING PLATES (USED LITHOGRAPHIC PRINTING PLATES AND LEFTOVER MATERIALS), 36 ... USED LITHOGRAPHIC PRINTING PLATE, 37 ... NEW METAL, 38 ... NOZZLE, 39 ... VORTEX, 40 ... MIXED MOLTEN METAL, 42 ... A SINGLE MELTING FURNACE

## Claims

1. A method for melting collected printing plates, in which used lithographic printing plates and/or collected printing plates that are a collection of leftover materials of lithographic printing plates are melted together with new metal in a melting furnace, comprising:
a first melting step in which the new metal is fed into and melts in the melting furnace; and
a second melting step in which a vortex into which the molten metal sinks down is generated in the molten metal of the new metal, and the collected printing plates are fed into and melt in the molten metal with the vortex generated therein.

2. The method for melting collected printing plates according to Claim 1,
wherein the melting furnace is a separately provided melting furnace in which a first melting furnace that performs the first melting step and a second melting furnace having a smaller capacity than the first melting furnace are mutually communicated, the molten metal of the new metal melted in the first melting furnace flows into the second melting furnace, and also the vortex is generated in the second melting furnace.

3. The method for melting collected printing plates according to Claim 2,
wherein an inert gas is supplied to the second melting furnace.

4. The method for melting collected printing plates according to any one of Claims 1 to 3,
wherein the melting furnace is a furnace for melting before rolling in a rolling apparatus.

5. The method for melting collected printing plates According to any one of Claims 2 to 4,
wherein the concentration of oxygen in the melting furnace is 11% or less when the plates and the new metal are melted.

6. The method for melting collected printing plates according to Claim 5,
wherein the concentration of oxygen is 6% or less.

7. The method for melting collected printing plates according to any one of Claims 1 to 6,
wherein the melting furnace has an airtight structure having a smoke exhaust tube provided with a damper, and a smoke exhaust control is performed so as to increase the pressure inside the melting furnace to be higher than outside by opening and closing the damper.

8. The method for melting collected printing plates according to any one of Claims 4 to 7,
wherein the rolling apparatus is a rolling apparatus for aluminum.

9. An apparatus for melting collected printing plates in which used lithographic printing plates and/or collected printing plates that are a collection of leftover materials of lithographic printing plates, are melted together with new metal, comprising: a melting furnace provided with a burner; and
a vortex-generating apparatus that is provided in the melting furnace and generates a vortex into which molten metal sinks down.

10. The apparatus for melting collected printing plates according to Claim 9,
wherein the melting furnace is constituted of:
a first melting furnace in which the new metal is fed and melted;
a second melting furnace having a smaller capacity than the first melting furnace, in which the collected printing plates are fed and melted; and
communicating paths that communicate the first melting furnace and the second furnace, and
the vortex-generating apparatus is provided in the second melting furnace.

11. The apparatus for melting collected printing plates according to Claim 10,
wherein an inert gas supplying means is provided to supply an inert gas to the second melting furnace.

12. A method for recycling collected printing plates in which used lithographic printing plates and/or collected printing plates that are a collection of leftover materials of lithographic printing plates, are recycled and reused as an aluminum raw material for the supporters of lithographic printing plates,
wherein the collected printing plates are directly melted together with new metal in a furnace for melting before rolling in a rolling apparatus without going through secondary metal, and the melting method according to any one of Claims 1 to 8 is used for the direct melting.

13. A method for recycling collected printing plates in which used lithographic printing plates and/or collected printing plates that are a collection of leftover materials of lithographic printing plates, are recycled and reused as an aluminum raw material for the supporters of lithographic printing plates,
wherein the melting apparatus according to any one of Claims 9 to 11 is disposed adjacent to a furnace for melting before rolling in a rolling apparatus, the collected printing plates are directly melted in the melting apparatus, and the molten metal is sent to the furnace for melting before rolling.

14. A method for recycling collected printing plates according to Claim 12 or 13,
wherein the rolling apparatus is a rolling apparatus for aluminum.
